# DEMANDE DE BREVET EUROPEEN

(11) **EP 1 235 058 A1**
(43) Date de publication de la demande: **28.08.2002**
(21) Numéro de dépôt: 02356034.5
(22) Date de dépôt: 21.02.2002
(51) Int. Cl.: G01F 15/00

(54) **Dispositif de connexion d'un compteur sur un poste de comptage et de délivrance d'un fluide**

(30) Priorité: 27.02.2001 FR 0102621
(71) Demandeur: Solyd, 69593 L'Arbresle (FR)
(72) Inventeur: Grillet, Jean-Charles, 69210 Nuelles (FR)
(74) Mandataire: Vuillermoz, Bruno

(57) **Abrégé**

Ce dispositif de connexion d'un compteur (3) au niveau d'un poste de comptage et de délivrance de fluide, et notamment d'eau est pourvu d'une vanne ou robinet d'isolement (2), et comprend une douille mobile (11), destinée à permettre l'accouplement de la vanne (2) sur ledit compteur (3), et susceptible de se translater coaxialement au niveau de la vanne ou du robinet d'isolement situé en amont du compteur, de telle sorte à induire le blocage de celle-ci ou de celui-ci en position ouverte.

## Description

L'invention concerne un dispositif de connexion d'un compteur, notamment un compteur d'eau, sur un poste de comptage et de délivrance installé au sein d'une habitation ou de tout autre lieu .

De manière connue, la distribution d'eau, notamment potable, fait l'objet d'un affermage au profit d'entités spécialisées qui, afin de permettre la captation de l'eau, son transport, son traitement et l'entretien du réseau, facture la délivrance en fonction des quantités effectivement consommées.

Cela suppose donc la mise en place de compteurs, au niveau de chacune des unités d'habitations, lesdits compteurs étant relevés périodiquement, engendrant la facturation correspondante.

Ces compteurs existent depuis longtemps, et sont traditionnellement mis en place sur un support fixe, au niveau duquel débouchent d'une part, l'arrivée d'eau, et d'autre part, le départ du réseau domestique.

Il n'est pas rare que des personnes indélicates démontent le compteur en question et assurent un branchement direct entre l'arrivée d'eau et le départ domestique pour ainsi, éviter à tout le moins partiellement, le paiement de la consommation correspondante.

L'objet de l'invention est de s'affranchir d'un tel inconvénient, en proposant un dispositif de connexion propre à interdire la délivrance d'eau, notamment dans l'hypothèse où le compteur est escamoté.

Ce dispositif de connexion d'un compteur au niveau d'un poste de comptage et de délivrance de fluide, et notamment d'eau, pourvu d'une vanne ou robinet d'isolement, se caractérise en ce qu'il comprend une douille mobile, destinée à permettre l'accouplement de la vanne sur ledit compteur, et susceptible de se translater coaxialement au niveau de la vanne d'isolement située en amont du compteur, de telle sorte à induire le blocage de celle-ci en position ouverte, interdisant de la sorte le démontage du compteur, celui-ci se trouvant sous la pression du réseau.

En d'autres termes, l'invention consiste à munir le poste de comptage d'un organe amovible visant à éliminer tout risque de fraude par désaccouplement du compteur.

Selon une première forme de réalisation de l'invention, la douille est munie d'un filetage externe au niveau de son extrémité amont, destiné à coopérer avec un filetage interne, ménagé au voisinage de la sortie aval de la vanne, la rotation de ladite douille pour permettre son accouplement ou son désaccouplement sur le compteur engendrant la coopération desdits filetages entre eux, et corollairement, la translation de la douille.

Selon une autre forme de réalisation de l'invention, la douille est dépourvue d'un tel filetage externe au niveau de son extrémité amont. Elle est susceptible de coulisser au sein de la sortie aval de la vanne, l'étanchéité étant assurée à ce niveau au moyen d'un joint torique, ménagé au sein de ladite sortie de vanne.

Selon une variante de l'invention, la douille est soumise, en l'absence de contrainte externe, à une force de rappel sous l'action d'un ressort taré, visant à induire le blocage de la vanne d'isolement.

Selon une première forme de réalisation de l'invention, la vanne est du type à boisseau sphérique et la douille mobile pénètre à l'intérieur dudit boisseau en cas de désaccouplement du compteur, de telle sorte à maintenir ladite vanne ouverte.

Dans une autre forme de réalisation de l'invention, la vanne d'isolement est du type à obturation par bille magnétique.

La manière dont l'invention peut être réalisée et les avantages qui en découlent ressortiront mieux des exemples de réalisation qui suivent, donnés à titre indicatif et non limitatif à l'appui des figures annexées.
La figure 1 est une représentation schématique en section longitudinale d'une forme de réalisation de l'invention mettant en oeuvre une vanne d'isolement à boisseau sphérique, le compteur étant en place.
La figure 2 est une vue analogue à la figure 1, le compteur étant escamoté.
La figure 3 est une représentation schématique en perspective d'une autre forme de réalisation de l'invention, mettant toujours en oeuvre une vanne d'isolement à boisseau sphérique.
La figure 4 est une représentation schématique en section longitudinale de la forme de réalisation de l'invention de la figure 3, le compteur étant escamoté.

L'installation conforme à l'invention est plus particulièrement décrite en relation avec un compteur d'eau. Bien évidemment, elle est susceptible d'application pour toute distribution de fluide liquide.

Le poste de comptage d'une telle installation d'alimentation en eau comporte fondamentalement une partie fixe (1), au niveau de laquelle débouche l'arrivée d'eau (4) du réseau de distribution d'eau et de laquelle part la canalisation (5) susceptible de permettre l'alimentation en eau domestique au sein d'une habitation par exemple. On a schématiquement représenté les organes nécessaires au maintien de la canalisation d'arrivée d'eau au niveau de ce poste de comptage, et notamment un écrou de serrage (20), coopérant avec une bague de crampage (21) et une bague intermédiaire de fixation (22), venant elle-même se visser sur ledit support (1). La bague de crampage (21) vient, de manière connue, faire pression sur un joint torique (23), par l'intermédiaire d'une rondelle (24) anti-friction.

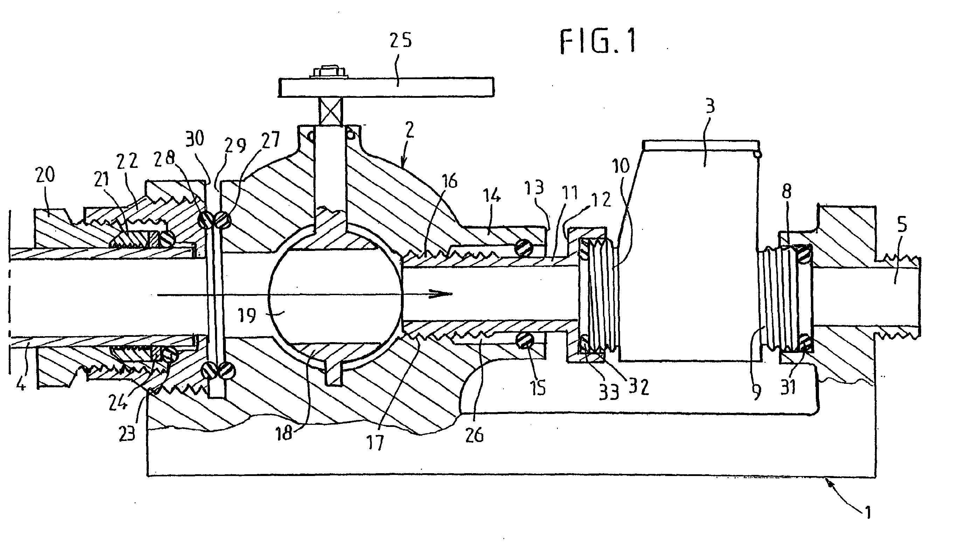

La canalisation (4) arrive donc au niveau d'une vanne (2) d'isolement, destinée, de manière connue, à fermer l'alimentation en eau de l'habitation. Au sein des figures 1 à 4, cette vanne d'isolement est du type à boisseau sphérique. En d'autres termes, elle est constituée d'une bille (18), percée d'une lumière diamétrale traversante (19), autorisant la circulation de l'eau lorsqu'elle est alignée avec les canalisation d'amenée et de délivrance, ou au contraire, l'interdisant en cas de rotation de 90°. Cette bille (18) est actionnée par un robinet (25) de facture traditionnelle. Le boisseau se prolonge par une cavité sensiblement cylindrique (26), destinée à permettre d'assurer la continuité de l'alimentation au niveau d'un compteur (3), puis de la canalisation de délivrance (5) au sein de l'unité d'habitation considérée.

Ce compteur (3) est tout d'abord fixé sur le support (1), par simple emboîtage de son extrémité avale (9) directement au sein dudit support (1), pourvu à cet effet d'un épaulement adapté (8), ledit épaulement recevant en outre un joint torique (31), destiné à être écrasé par l'extrémité avale (9) du compteur, afin d'assurer l'étanchéité à ce niveau. Au niveau de son extrémité amont, ledit compteur peut être est vissé sur une douille (11), mobile en translation au sein de la cavité (26) de la vanne d'isolement (2), et, décrite ci-après plus en détail. Cependant, dans une version avantageuse, l'extrémité amont du compteur est simplement enclenchée au sein de ladite douille (11), celle-ci étant munie à cet effet, d'une zone de réception (32) de forme complémentaire à l'extrémité amont (10) du compteur, zone au sein de laquelle vient s'emmancher l'extrémité (10) du compteur.

Cette zone (32) reçoit également un joint torique (33), destiné à être écrasé par ladite extrémité (10), et ce, également afin d'assurer l'étanchéité à ce niveau.

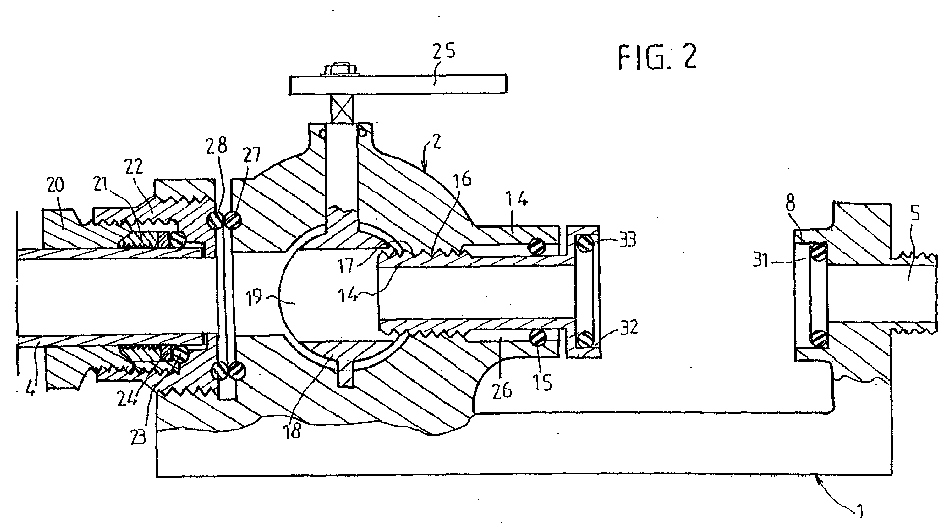

Cette douille mobile (11) est donc susceptible de se déplacer en translation dans l'axe des canalisations (4) et (5) et plus spécifiquement, coaxialement par rapport à la sortie de la vanne d'isolement (2). Dans la forme de réalisation décrite en relation avec les figures 1 et 2, cette douille (11) est munie au niveau de son extrémité amont d'un filetage (16), externe, destiné à coopérer avec un filetage interne (17) ménagé immédiatement en aval du boisseau sphérique au sein de la cavité (26).

De fait, lorsque l'on souhaite procéder au remplacement du compteur, on effectue une rotation de ladite douille (11) sur elle-même, induisant de par la coopération des filetages (16) et (17) entre eux, son introduction à l'intérieur de la bille (19) de la vanne d'isolement. Corollairement, cette translation induit le retrait de l'extrémité (32) de la douille (11) hors de l'extrémité (10) du compteur.

De la sorte, ladite vanne est maintenue bloquée par la douille (11) en position ouverte, et afin d'éviter tout écoulement d'eau lors du changement du compteur, on introduit en amont de la vanne (2), une spatule d'obturation (non représentée), qui vient se glisser entre deux joints toriques (27, 28) en contact intime l'un avec l'autre, respectivement positionnés dans un évidement prévu à cet effet sur la face frontale (29) de la vanne d'isolement, et au sein d'un évidement également prévu à cet effet, sur la face frontale (30) de la bague intermédiaire de fixation (22). La mise en oeuvre d'une telle spatule est par exemple décrite dans le document FR-A-2 744 783.

On conçoit dès lors, que la coopération du filetage externe (16) de la partie amont de la douille mobile (11) avec le filetage interne (17) de la vanne d'isolement induit nécessairement le maintien de celle-ci à l'intérieur de la bille (19) lors de l'enlèvement du compteur, ainsi que cela apparaît très clairement au sein de la figure 2.

En d'autres termes, seul le maintien du compteur en place est donc la solidarisation de la partie amont de celui-ci par la douille mobile (11) permet le fonctionnement efficace de la vanne d'isolement (2).

A défaut d'obturation de la canalisation amont (4), notamment par le système de spatule précitée, toute tentative d'enlèvement du compteur se solde par l'aspersion du fraudeur et l'inondation du lieu considéré, puisque le système se trouve sous la pression du réseau.

Dans une autre forme de réalisation non représentée, la douille mobile (11) est soumise, en l'absence de contraintes externes, à un effet de rappel en direction de l'amont, c'est à dire visant à la maintenir à l'intérieur de la bille (19), et ce, sous l'effet d'un ressort à boudins taré. Ce ressort est positionné à l'extérieur de la douille mobile (11), et s'étend entre l'extrémité avale (13) de la cavité (26) de la vanne d'isolement, et un épaulement (12), ménagé au voisinage de l'extrémité avale (32) de ladite douille (11), lieux au niveau desquels il est solidarisé, donc respectivement à la vanne d'isolement et à la douille.

Dans cette forme de réalisation, il n'est donc plus nécessaire d'usiner la douille mobile (11) et corollairement la cavité (26) de la vanne d'isolement (2) afin d'y créer un filetage, celui-ci devenant inutile.

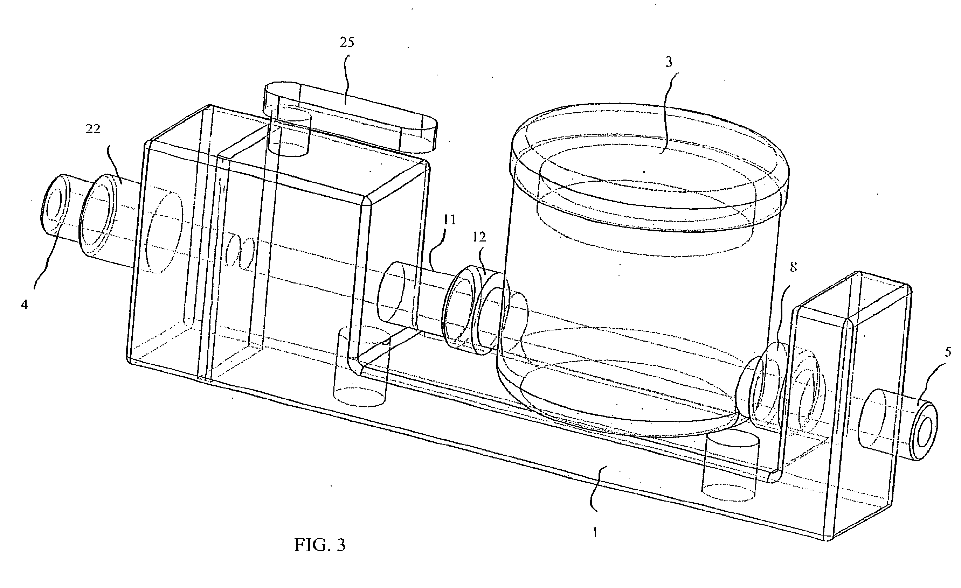

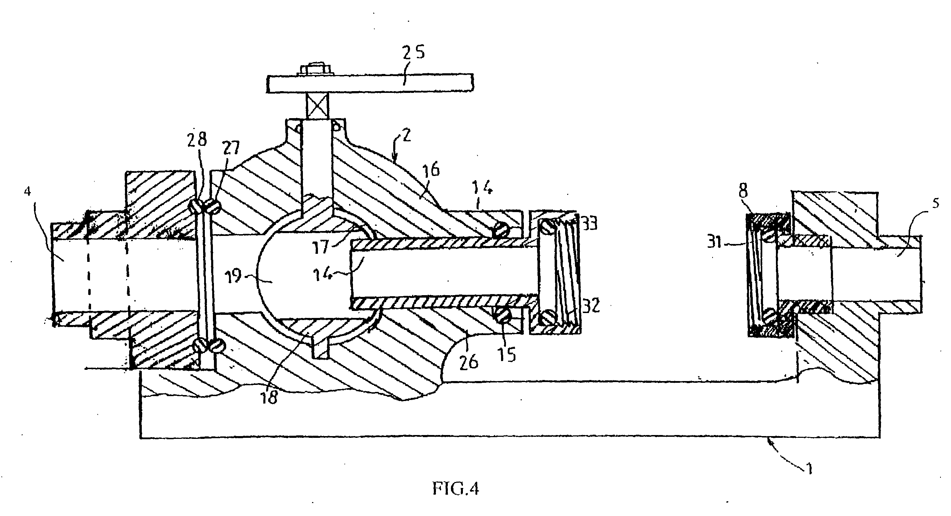

On a de fait représenté en relation avec les figures 3 et 4, la mise en oeuvre d'une telle douille (11), dépourvue de filetage externe. Celle-ci coulisse donc librement à l'intérieur de la sortie avale (26) de la vanne (2), sauf lorsqu'elle est soumise aux contraintes générées par le ressort de rappel précité.

En outre, afin d'assurer l'étanchéité au niveau aval de la vanne, un joint torique (15) est ménagé dans un logement prévu à cet effet au voisinage de l'extrémité avale de ladite sortie avale (26), et propre à coopérer avec la douille (11).

Dans un autre type de vanne d'isolement (non représenté), du type à obturation par billes magnétiques, le principe demeure identique. Une telle valve d'isolement est par exemple décrite en relation avec le document FR-A-2 719 886.

On conçoit de fait tout l'intérêt du dispositif conforme à l'invention, dans la mesure où il permet de lutter de manière efficace contre toute tentative de fraude au niveau du réseau domestique de distribution d'eau.

## Revendications

1. Dispositif de connexion d'un compteur (3) au niveau d'un poste de comptage et de délivrance de fluide, et notamment d'eau, pourvu d'une vanne ou robinet d'isolement (2), ***caractérisé* en ce qu'**il comprend une douille mobile (11), destinée à permettre l'accouplement de la vanne (2) sur ledit compteur (3), et susceptible de se translater coaxialement au niveau de la vanne ou du robinet d'isolement situé en amont du compteur, de telle sorte à induire le blocage de celle-ci ou de celui-ci en position ouverte.

2. Dispositif de connexion d'un compteur (3) au niveau d'un poste de comptage et de délivrance de fluide selon la revendication 1, ***caractérisé* en ce que** la douille mobile (11) est munie d'un filetage externe (16) au niveau de son extrémité amont, destiné à coopérer avec un filetage interne (17), ménagé au voisinage de la sortie avale (26) de la vanne d'isolement (2), la rotation de ladite douille engendrant la coopération desdits filetages entre eux, et corollairement, la translation de la douille à l'intérieur de la vanne.

3. Dispositif de connexion d'un compteur (3) au niveau d'un poste de comptage et de délivrance de fluide selon la revendication 2, ***caractérisé* en ce que** la douille mobile (11) est munie d'un filetage interne au niveau de son extrémité avale (12), destiné à coopérer avec un filetage externe correspondant, ménagé au niveau de l'extrémité amont (10) du compteur (3), afin de permettre son accouplement sur celui-ci.

4. Dispositif de connexion d'un compteur (3) au niveau d'un poste de comptage et de délivrance de fluide selon la revendication 1, ***caractérisé* en ce que** la douille mobile (11) est dépourvue de tout filetage externe, et est donc susceptible de coulisser librement à l'intérieur de la sortie avale (26) de la vanne d'isolement (2).

5. Dispositif de connexion d'un compteur (3) au niveau d'un poste de comptage et de délivrance de fluide selon l'une des revendications 1 à 4, ***caractérisé* en ce qu'**un joint torique (15) est ménagé dans un logement prévu à cet effet au voisinage de l'extrémité avale de la sortie avale (26), et propre à coopérer avec la douille (11), de telle sorte à assurer l'étanchéité à ce niveau.

6. Dispositif de connexion d'un compteur (3) au niveau d'un poste de comptage et de délivrance de fluide selon les revendications 1, 4 et 5, ***caractérisé* en ce qu'**en l'absence de contraintes externes, la douille mobile (11) est soumise à une force de rappel sous l'action d'un ressort taré, visant à induire l'introduction de la douille mobile (11) à l'intérieur de la vanne d'isolement (2), et corollairement, le blocage de celle-ci en position ouverte.

7. Dispositif de connexion d'un compteur (3) au niveau d'un poste de comptage et de délivrance de fluide selon la revendication 6, ***caractérisé* en ce que** le ressort de rappel est positionné à l'extérieur de la douille mobile (11), et s'étend entre l'extrémité avale (13) de la cavité (26) de la vanne d'isolement (2), et un épaulement (12), ménagé au voisinage de l'extrémité avale de ladite douille (11), lieux au niveau desquels ledit ressort est solidarisé respectivement à la vanne d'isolement et à la douille.

8. Dispositif de connexion d'un compteur (3) au niveau d'un poste de comptage et de délivrance de fluide selon l'une des revendications 1 à 7, ***caractérisé* en ce que** la vanne d'isolement (2) est du type à boisseau sphérique, et **en ce que** la douille mobile (11) pénètre à l'intérieur de la bille (19) de ladite vanne, en cas de désaccouplement du compteur.

9. Dispositif de connexion d'un compteur (3) au niveau d'un poste de comptage et de délivrance de fluide selon l'une des revendications 1 à 7, ***caractérisé* en ce que** la vanne d'isolement (2) est du type à obturation par bille magnétique.
